# FASCICULE DE BREVET EUROPEEN

(11) **EP 2 831 711 B1**
(45) Date de publication et mention de la délivrance du brevet: **25.10.2017**
(21) Numéro de dépôt: 13713189.2
(22) Date de dépôt: 28.03.2013
(51) Int. Cl.: G06F 3/046, G06F 3/041, G06F 3/0354

(54) **PROCEDE DE DETECTION D'UN POINT DE CONTACT ENTRE UNE POINTE D'UN USTENSILE ET UN SUPPORT D'ECRITURE**
VERFAHREN ZUR ERKENNUNG EINES KONTAKTPUNKTES ZWISCHEN EINER INSTRUMENTENSPITZE UND EINER SCHREIBUNTERLAGE
METHOD OF DETECTING A POINT OF CONTACT BETWEEN A TIP OF A UTENSIL AND A WRITING SUPPORT

(30) Priorité: 29.03.2012 FR 1252880
(43) Date de publication de la demande: 04.02.2015
(73) Titulaire: Commissariat à l'Énergie Atomique et aux Énergies Alternatives, 75015 Paris (FR)
(72) Inventeur: HAUTSON, Tristan, F-38000 Grenoble (FR); ALOUI, Saifeddine, F-38000 Grenoble (FR); DAVID, Dominique, F-38640 Claix (FR); JOBERT, Timothée, F-38000 Grenoble (FR); VASSILEV, Andréa, F-38000 Grenoble (FR)
(74) Mandataire: GIE Innovation Competence Group
(86) Numéro de dépôt international: PCT/EP2013/056810
(87) Numéro de publication internationale: WO 2013/144338

(56) Documents cités:
- WO-A2-2005/020057
- FR-A1- 2 952 450
- US-A1- 2008 106 520

## Description

L'invention concerne un procédé et un appareil de détection d'un point de contact entre une pointe d'un ustensile et un support d'écriture. L'invention a également pour objet un procédé de relevé de la trace dessinée par une pointe d'un ustensile sur un support d'écriture.

L'ustensile est choisi dans le groupe composé d'un crayon et d'un effaceur.

Par crayon, on désigne ici tout ustensile directement manipulable par la main d'un être humain afin de dessiner sur un support physique d'écriture une trace. Typiquement, la trace est visible à l'oeil nu soit directement sur le support physique soit sur un écran d'affichage. Pour laisser une trace directement visible sur le support, le crayon dépose un liquide ou un solide coloré pour former la trace directement visible par un être humain sur le support d'écriture. Le liquide coloré est typiquement une encre ou de la peinture. Le solide coloré est par exemple du graphite.

Par effaceur, on désigne ici tout ustensile directement manipulable par la main d'un être humain afin de dessiner sur un support physique d'écriture une trace qui, lorsqu'elle rencontre une trace laissée par le crayon, efface la trace laissée par ce crayon. L'effacement peut être un effacement numérique de donnée d'une trace enregistrée à l'aide d'un crayon ou être un effacement physique de la trace sur le support. Par exemple, l'effacement physique de la trace sur le support peut provenir d'une réaction chimique et/ou d'un effet mécanique comme l'abrasion. Contrairement au crayon, la trace dessinée par l'effaceur n'est généralement pas visible à l'oeil nu.

Par « dessiner », on englobe ici le fait de parcourir avec une pointe le support d'écriture pour écrire ou effacer.

Le support d'écriture est une feuille de papier, une toile ou tout autre support sur lequel on peut dessiner.

Pour correctement relever la trace dessinée par cette pointe sur un support d'écriture, il est très important de détecter correctement l'existence du point de contact entre la pointe de l'ustensile et le support d'écriture. En effet, à chaque fois que la pointe n'est plus en contact avec le support d'écriture, la trace relevée doit s'interrompre.

Des procédés connus de relevé de la trace dessinée par une pointe d'un ustensile sur un support d'écriture, comportent :
- la mesure de la position et de l'orientation d'un objet magnétique fixé sans aucun degré de liberté sur l'ustensile,
- le calcul de la position de la pointe en fonction de la position et de l'orientation mesurées de l'objet magnétique,
- la détection d'un point de contact entre la pointe de l'ustensile et le support d'écriture,
- a chaque fois qu'un point de contact est détecté, l'enregistrement de la position calculée pour la pointe, l'enregistrement successif de ces positions calculées formant le relevé de la trace dessinée par la pointe de l'ustensile sur le support d'écriture.

Par exemple, un tel procédé est divulgué dans la demande de brevet WO 02/043045. Dans cette demande de brevet, la détection du point de contact est réalisée en mesurant la pression qui s'exerce sur la pointe. En effet, la pression qui s'exerce sur la pointe d'un crayon est beaucoup plus importante lorsque la pointe est en appui sur le support d'écriture que lorsqu'elle est en l'air. Pour cela, la pointe est montée déplaçable en coulissement à l'intérieur du crayon et le crayon comporte un transducteur capable de convertir le déplacement de la pointe en un signal indiquant l'existence d'un point de contact.

Ainsi, la nécessité de détecter le point de contact entre la pointe du crayon et le support d'écriture se traduit par l'ajout d'un transducteur de déplacement à l'intérieur du crayon, ce qui en complexifie la réalisation.

De l'état de la technique est également connu de FR2952450A1 et US2008/106520A1.

L'invention vise à détecter le point de contact entre la pointe d'un ustensile, tel qu'un crayon ou un effaceur, et le support d'écriture sans avoir recours à un transducteur de déplacement de la pointe. Elle a donc pour objet un tel procédé de détection conforme à la revendication 1.

Le procédé ci-dessus permet d'éviter l'utilisation à l'intérieur de l'ustensile d'un transducteur capable de convertir la pression mécanique qui s'exerce sur la pointe de l'ustensile lorsqu'on est en train d'écrire en un signal indiquant l'existence d'un point de contact. Ce procédé permet donc une réalisation plus simple de l'ustensile.

Les modes de réalisation de ce procédé de détection peuvent comporter une ou plusieurs des caractéristiques des revendications dépendantes.

Ces modes de réalisation présentent en outre les avantages suivants :
- l'utilisation de la hauteur de la pointe de l'ustensile par rapport à la face d'appui rend le procédé plus robuste vis-à-vis des changements d'utilisateur ;
- la prise en compte de la fiabilité de la mesure de la hauteur dans le choix de la valeur du seuil de contact augmente la précision de la détection d'un point de contact ;
- le calcul automatique de la valeur du seuil de contact en fonction du premier maximum dans la densité de probabilité de la hauteur permet d'adapter automatiquement la valeur de ce seuil de contact à l'épaisseur du support d'écriture ;
- la calibration automatique de la position de l'objet magnétique par rapport à la pointe permet de s'adapter automatiquement à une position quelconque de l'objet magnétique le long de l'axe de l'ustensile.

La demande a également pour objet un procédé de relevé de la trace dessinée par une pointe d'un ustensile sur un support d'écriture conforme à la revendication 9.

L'utilisation du même objet magnétique pour déterminer la position de la pointe et pour détecter le point de contact permet de simplifier l'implémentation du procédé.

L'invention a également pour objet un appareil de détection d'un point de contact entre une pointe d'un ustensile et un support d'écriture conforme à la revendication 10.

Les modes de réalisation de cet appareil peuvent comporter la caractéristique de la revendication 11.

L'invention sera mieux comprise à la lecture de la description qui va suivre, donnée uniquement à titre d'exemple non limitatif et faite en se référant aux dessins sur lesquels :
- la figure 1 est une illustration schématique d'un système de relevé de la trace de la pointe d'un crayon sur un support d'écriture ;
- la figure 2 est une illustration schématique d'une partie d'un réseau de magnétomètres utilisé dans le système de la figure 1 ;
- la figure 3 est un organigramme d'un procédé de relevé de la trace de la pointe d'un crayon sur un support d'écriture à l'aide du système de la figure 1 ;
- la figure 4 est un graphe illustrant la variation de la hauteur de la pointe du crayon dans le système de la figure 1 ;
- la figure 5 est une illustration d'un histogramme utilisé dans le procédé de la figure
- la figure 6 est un organigramme d'une phase de calibration susceptible d'être utilisée dans le procédé de la figure 3 ;
- la figure 7 est une illustration schématique de deux inclinaisons différentes du crayon du système de la figure 1 ;
- la figure 8 est une illustration schématique d'un autre mode de réalisation d'un crayon du système de la figure 1 ;
- les figures 9 et 10 sont des illustrations, respectivement, de résultats expérimentaux d'un relevé d'une trace à l'aide du système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détails.

L'invention va maintenant être décrite dans le cas particulier où l'ustensile est un crayon.

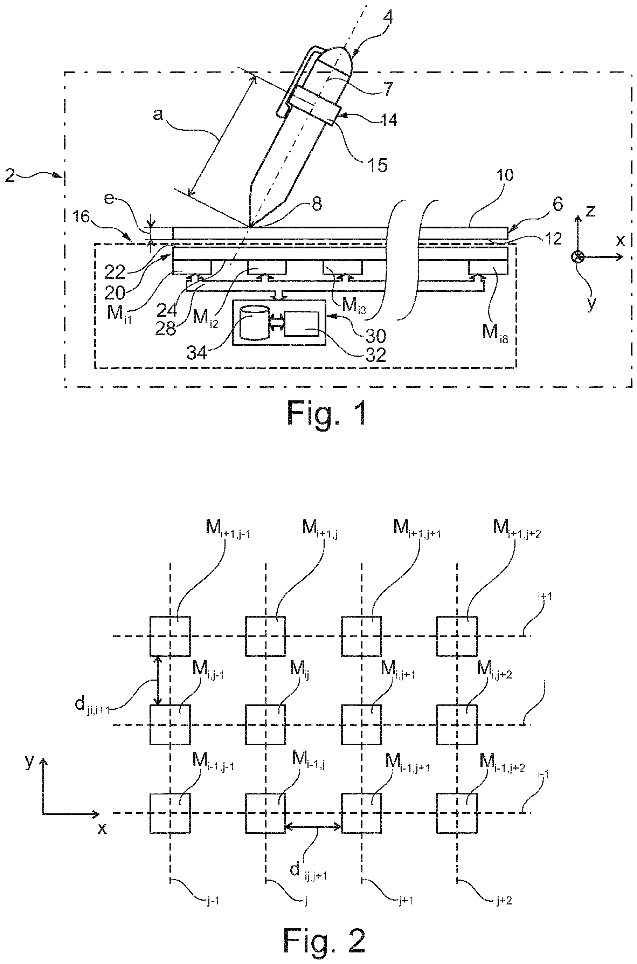

La figure 1 représente un système 2 de relevé de la trace de la pointe d'un crayon 4 sur un support d'écriture 6.

Le crayon 4 est librement déplaçable directement par la main d'un être humain dans un repère XYZ fixé sans aucun degré de liberté au système 2. Ici, les directions X et Y de ce repère sont horizontales et la direction Z est verticale. Par la suite, les termes « au-dessus », « en dessous », « supérieur », « inférieur » sont relatifs à cette direction verticale Z.

Le crayon 4 pèse typiquement moins de 1 kg et, de préférence, moins de 200g ou 100g. Les dimensions de ce crayon sont également suffisamment réduites pour qu'il soit tenu à l'aide d'une seule main par un être humain. Le crayon 4 présente une forme oblongue. Ici, il s'étend le long d'un axe longitudinale 7.

Par exemple, ce crayon 4 est entièrement réalisé dans des matériaux non magnétiques, c'est-à-dire des matériaux ne présentant aucune propriété magnétique mesurable par le système 2.

Le crayon 4 est ici choisi dans le groupe composé d'un stylo à bille, d'un stylo à encre, d'un stylo à plume, d'un feutre, d'un crayon bois, d'un marqueur, d'un surligneur, d'un calame, d'une plume, d'un pinceau. Dans ce mode de réalisation, à titre d'illustration, le crayon 4 est un stylo à bille.

Le crayon 4 présente une pointe 8 qui dépose un liquide ou un solide coloré sur une face supérieure 10 du support d'écriture 6. A cet effet, par exemple, le crayon 4 est pourvu d'un réservoir de liquide coloré tel qu'une cartouche. Le liquide coloré est par exemple de l'encre. La pointe 8 est située sur l'axe 7 à l'extrémité inférieure du crayon 4. Dans ce mode de réalisation, la pointe 8 présente une symétrie de révolution autour de l'axe 7. Ainsi, la position angulaire de la pointe 8 autour de l'axe 7 ne modifie pas la largeur ou la forme de la trace laissée par cette pointe 8 sur le support 6.

Par exemple, le support 6 est un support d'écriture conventionnel présentant une épaisseur e non nulle dans la direction Z. Ici, l'épaisseur e est supposée constante sur toute la face 10. L'épaisseur e peut être quelconque. En particulier, cette épaisseur e peut être très petite, c'est-à-dire inférieure à 1 mm ou à 0,5 mm dans le cas d'une feuille de papier ou d'une toile. L'épaisseur e peut aussi être très grande, c'est-à-dire supérieure à 5 mm dans le cas d'un cahier ou d'un bloc note.

Le support 6 peut être rigide ou souple. Par exemple, un support rigide est une plaque de verre ou de métal. Un support souple est une feuille de papier.

La surface de la face 10 est suffisamment grande pour permettre d'écrire ou de dessiner. A cet effet, elle est typiquement supérieure à 6 ou 20 ou à 100 cm².

Le support 6 présente également une face inférieure 12 du côté opposé à la face 10.

Le système 2 comporte un objet magnétique 14 et un appareil 16 de localisation de la pointe 8 dans le repère XYZ à partir de la position et de l'orientation mesurées de l'objet 14. Sur la figure 1, les traits ondulés verticaux indiquent qu'une partie de l'appareil 16 n'a pas été représentée.

L'objet 14 présente au moins un moment magnétique mesurable. Typiquement, il est réalisé en matériau ferromagnétique ou ferrimagnétique. Ici, l'objet 14 est formé d'un seul aimant permanent 15. Cet aimant 15 présente un moment magnétique non nul même en absence de champ magnétique extérieur. Par exemple, le champ magnétique coercitif de cet aimant 15 est supérieur à 100 A.m⁻¹ ou 500 A.m⁻¹. La puissance de l'aimant 15 est typiquement supérieure à 0,01 A.m² ou 0,1 A.m².

L'aimant 15 a ici la forme d'un anneau dont le diamètre et plus grand que sa hauteur. La plus grande dimension de cet aimant 15 est notée L par la suite. Il s'agit ici du diamètre extérieur de l'anneau.

L'objet 14 est fixé sans aucun degré de liberté au crayon 4 de manière à ce que le moment magnétique de l'aimant 15 soit confondu avec l'axe longitudinal 7. A cet effet, l'axe de révolution de l'anneau est confondu avec l'axe 7. Ici, l'anneau entoure le corps rigide en matériau non magnétique du crayon. Sur la figure 1, la direction du moment magnétique de l'aimant 15 est représentée par une flèche.

La distance la plus courte qui sépare la pointe 8 de la projection orthogonale du centre de gravité de l'objet 14 sur l'axe 7 est ici notée « a ».

L'appareil 16 comprend une tablette 20 présentant une face avant 22 d'appui et une face arrière 24. Cette tablette est typiquement dépourvue de circuit électrique ou électronique. Elle est par exemple réalisée d'un seul bloc de matière.

La face 22 s'étend horizontalement. La face inférieure 12 du support 6 est directement déposée sur la face 22. La surface de la face 22 est suffisamment grande pour permettre d'écrire ou de dessiner. Typiquement, elle est supérieure à 20 ou 100 cm².

La tablette 20 est réalisée dans un matériau rigide non magnétique. Par exemple, le module de Young de la tablette 20 est supérieur à 2 ou 10 ou 50 GPa à 25°C. De plus, son épaisseur est suffisante pour ne pas se plier sous la pression exercée par la main de l'utilisateur lorsque celui-ci écrit à l'aide du crayon 4 sur le support 6. Par exemple, la tablette 20 est une plaque de verre dont l'épaisseur est supérieure à 1 mm ou 4 mm.

L'appareil 16 comporte un réseau de N magnétomètres tri-axes Mᵢⱼ. Ce réseau permet de localiser l'objet 14 dans le repère XYZ. Par localisation, on entend ici la détermination de la position x, y, z de l'objet 14 dans le repère XYZ et aussi la détermination de l'orientation de l'objet 14 par rapport aux directions X, Y et Z du repère XYZ. Par exemple, l'orientation de l'objet 14 est représentée par les angles θₓ, θ_{y} et θ_{z} du moment magnétique de l'objet 14, respectivement, par rapport aux axes X, Y et Z du repère.

Typiquement, N est supérieur à cinq et, de préférence, supérieur à seize ou trente-deux. Ici, N est supérieur ou égal à soixante-quatre.

Dans ce mode de réalisation, les magnétomètres Mᵢⱼ sont alignés en lignes et en colonnes pour former une matrice. Ici, cette matrice comporte huit lignes et huit colonnes. Les indices i et j identifient, respectivement, la ligne et la colonne de cette matrice à l'intersection de laquelle se trouve le magnétomètre Mᵢⱼ. Sur la figure 1, seuls les magnétomètres Mᵢ₁, Mᵢ₂, Mᵢ₃, Mᵢ₄ et Mᵢ₈ d'une ligne i sont visibles. La position des magnétomètres Mᵢⱼ les uns par rapport aux autres est décrite plus en détail en référence à la figure 2.

Chaque magnétomètre Mᵢⱼ est fixé sans aucun degré de liberté aux autres magnétomètres. A cet effet, les magnétomètres Mᵢⱼ sont fixés sans aucun degré de liberté sur la face arrière 24 de la tablette 20.

Chaque magnétomètre Mᵢⱼ mesure la direction et l'intensité du champ magnétique généré par l'objet 14. Pour cela, chaque magnétomètre Mᵢⱼ mesure la norme de la projection orthogonale du champ magnétique généré par l'objet 14 au niveau de ce magnétomètre Mᵢⱼ sur trois axes de mesure de ce magnétomètre. Ici, ces trois axes de mesure sont orthogonaux entre eux. Par exemple, les axes de mesure de chacun des magnétomètres Mᵢⱼ sont, respectivement, parallèles aux directions X, Y et Z du repère. La sensibilité du magnétomètre Mᵢⱼ est par exemple inférieure à 10⁻⁶T ou 10⁻⁷T.

Chaque magnétomètre Mᵢⱼ est raccordé par l'intermédiaire d'un bus 28 de transmission d'informations à une unité de traitement 30.

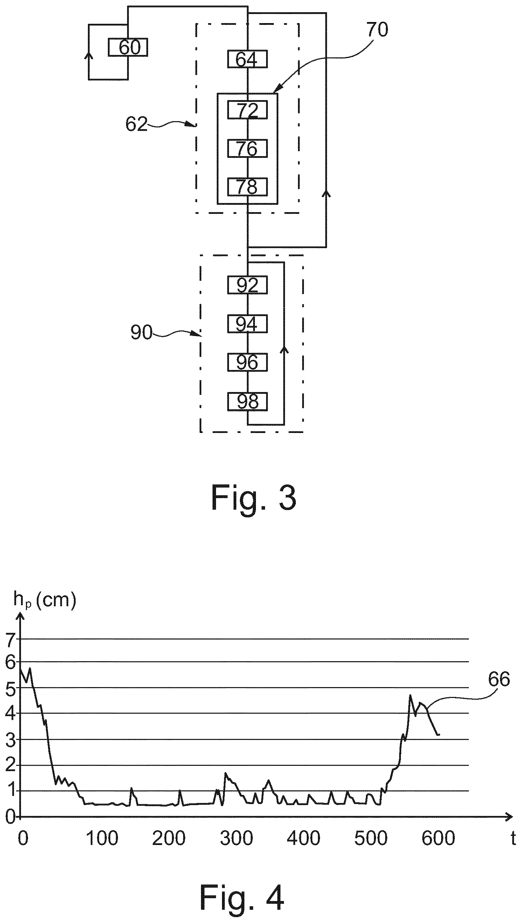

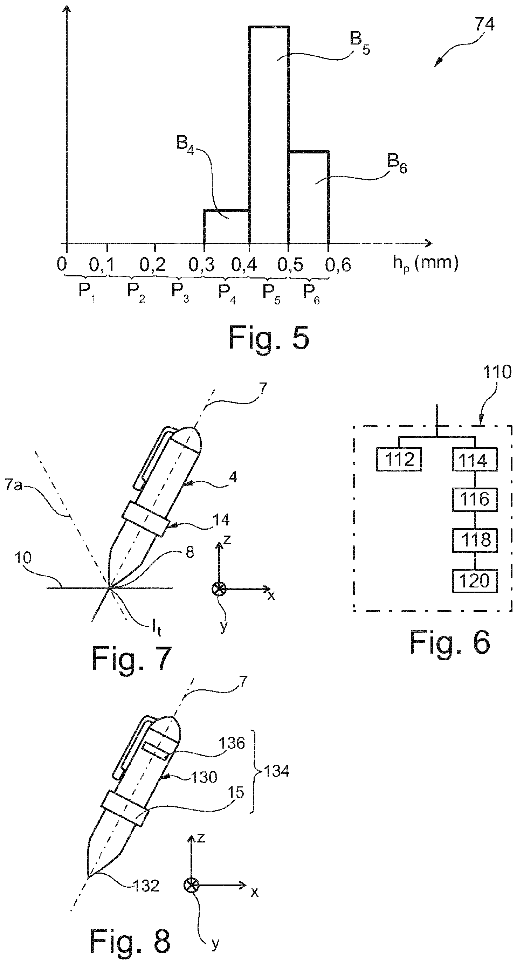

L'unité de traitement 30 est capable de déterminer la position de la pointe 8 sur le support 6 à partir de la position et de l'orientation mesurées de l'objet 14 dans le repère XYZ par les magnétomètres Mᵢⱼ. A cet effet, l'unité 30 comporte un calculateur électronique 32 programmable apte à exécuter des instructions enregistrées sur un support d'enregistrement d'informations. L'unité 30 comporte donc aussi une mémoire 34 contenant les instructions nécessaires pour l'exécution par le calculateur 32 du procédé de la figure 3 ou 6. En particulier, l'unité 30 implémente un modèle mathématique associant chaque mesure d'un magnétomètre Mᵢⱼ à la position et à l'orientation de l'objet 14 dans le repère XYZ. Ce modèle est implémenté sous la forme d'un filtre de Kalman étendu. Ce modèle est typiquement construit à partir des équations physiques de l'électromagnétisme. Pour construire ce modèle, l'objet 14 est approximé par un dipôle magnétique. Cette approximation n'introduit que très peu d'erreurs si la distance entre l'objet 14 et le magnétomètre Mᵢⱼ est supérieure à 2L et, de préférence, supérieure à 3L, où L est la plus grande dimension de l'objet 14. Typiquement, L est inférieur à 20cm et, de préférence, inférieur à 10 ou 5cm.

L'unité 30 est également capable d'acquérir et d'enregistrer la trace laissée par la pointe 8 sur le support 6 à partir des différentes positions déterminées pour cette pointe.

La figure 2 représente une partie des magnétomètres Mᵢⱼ du dispositif 12. Ces magnétomètres Mᵢⱼ sont alignés en lignes i parallèles à la direction X. Ces magnétomètres sont également alignés en colonnes j parallèles à la direction Y pour former une matrice. Les lignes i et les colonnes j sont disposées dans l'ordre des indices croissants.

Le centre du magnétomètre Mᵢⱼ se trouve à l'intersection de la ligne i et de la colonne j. Le centre du magnétomètre correspond au point où le champ magnétique est mesuré par ce magnétomètre. Ici, les indices i et j appartiennent à l'intervalle [1 ; 8].

Les centres de deux magnétomètres Mᵢⱼ et M_{i,j+1} immédiatement consécutifs le long d'une ligne i sont séparés par une distance d_{i,j,j+1}. De façon similaire, le centre de deux magnétomètres Mᵢⱼ et M_{i+1,,j} immédiatement consécutifs le long d'une même colonne j sont séparés par une distance d_{j,i,i+1}.

Ici, quelle que soit la ligne i, la distance d_{i,j,j+1} est la même. Cette distance est donc notée dⱼ. De façon similaire, quelle que soit la colonne j, la distance d_{j,i,i+1} entre deux magnétomètres est la même. Cette distance est donc notée dᵢ.

Dans ce mode de réalisation particulier, les distances dᵢ et dⱼ sont toutes les deux égales à d.

Typiquement, la distance d est comprise entre 1 et 4 cm lorsque :
- la puissance de l'aimant permanent est de 0,5 A.m²,
- la sensibilité des magnétomètres est de 4*10⁻⁷T, et
- le nombre de magnétomètres Mᵢⱼ est de soixante-quatre.

Le fonctionnement du système 2 va maintenant être décrit en référence au procédé de la figure 3.

Lors d'une étape 60, l'appareil 16 mesure en permanence la position et l'orientation de l'objet 14 dans le repère XYZ lié sans aucun degré de liberté à la face avant 22. Pour simplifier, on suppose ici que les directions X et Y de ce repère sont contenues dans le plan de la face avant 22. Par conséquent, la hauteur, notée h₀, de l'objet 14 par rapport à la face 22 est égale à la valeur de la coordonnée z de l'objet 14 dans le repère XYZ.

Dans ce premier mode de réalisation, on suppose que la distance « a » qui sépare la pointe 8 de l'objet 14 et que l'épaisseur de la tablette 20 sont connues et préenregistrées dans la mémoire 34. Par exemple, la distance « a » peut être fixée par construction ou mesurée par l'utilisateur, puis transmise à l'unité de traitement 30. Par conséquent, la hauteur hₚ de la pointe 8 par rapport à la face 22 est connue à chaque fois que la position et l'orientation de l'objet 14 sont mesurées. La position de la pointe 8 est égale à la position de l'objet 14 décalée de la distance « a » dans la direction du moment magnétique de l'objet 14. Par exemple, la hauteur hₚ est calculée à l'aide de la relation suivante : hₚ = h₀ - a*cos θ, où θ est l'angle entre le moment magnétique de l'objet 14 et la direction verticale Z. L'angle θ et la valeur de la hauteur h₀ sont mesurés lors de l'étape 60. Les coordonnées de la position de la pointe 8 dans le repère XYZ sont ici notées xₚ, yₚ et zₚ. Ici, la coordonnée zₚ est égale à la hauteur hₚ.

En parallèle, lors d'une phase 62 de calibration, un seuil de contact S_{cp} est automatiquement configuré. Le seuil S_{cp} permet de détecter le contact de la pointe 8 avec le support 6. En effet, on considère qu'il existe un point de contact entre la pointe 8 et le support 6 si la hauteur hₚ est inférieure ou égale au seuil S_{cp}. Ce seuil S_{cp} est fonction de l'épaisseur e du support 6.

Pour déterminer automatiquement la valeur de ce seuil S_{cp}, lors d'une étape 64, tant que la hauteur hₚ est inférieure à un seuil S_{cpmax}, les mesures de la hauteur hₚ sont enregistrées en continue pendant une fenêtre glissante de durée ΔT. La valeur du seuil S_{cpmax} est prédéterminée. Typiquement, la valeur de ce seuil S_{cpmax} est suffisamment petite pour qu'il soit probable que l'utilisateur soit en train d'écrire lorsque la hauteur hₚ est inférieure à ce seuil. La valeur du seuil S_{cpmax} est également choisie suffisamment grande pour permettre le calcul de la valeur du seuil S_{cp} pour une très grande plage d'épaisseur e du support 6. Par exemple, la valeur du seuil S_{cpmax} est supérieure à 1cm ou 3cm. Elle est également de préférence inférieure à 15cm ou 20cm.

De préférence, à chaque fois qu'une mesure de la hauteur hₚ est enregistrée, le calculateur 32 enregistre en même temps, la valeur de la variance vₚ de l'erreur d'estimation sur cette mesure de la hauteur hₚ. Par exemple, cette valeur de la variance vₚ est calculée à partir de la matrice de covariance de l'état estimé par le filtre de Kalman étendu à cet instant. Ainsi, une table, contenue dans la mémoire 34, associe à chaque mesure de la hauteur hₚ, la valeur de la variance vₚ. La valeur de la variance vₚ associée à une mesure de la hauteur hₚ est représentative de la fiabilité de cette mesure. En effet, en fonction de la position de l'objet 14 par rapport aux magnétomètres Mᵢⱼ, la fiabilité dans la mesure de la hauteur hₚ varie. Par exemple, la fiabilité dans la mesure est plus faible si l'objet 14 se trouve sur un bords de la tablette 20.

La durée ΔT est telle que le nombre de mesures enregistrées pendant cette durée soit supérieur à 100 ou 1000. De plus, la durée ΔT est suffisamment longue pour contenir les valeurs mesurées de la hauteur hₚ pendant l'écriture d'un mot complet d'au moins cinq lettres et, de préférence, pendant l'écriture d'une phrase d'au moins quinze ou vingt lettres. Par exemple, la durée ΔT est supérieure ou égale à 5s ou 10s ou 30s. La durée ΔT est généralement inférieure à une minute.

La figure 4 représente les valeurs mesurées de la hauteur hₚ enregistrées pendant l'étape 64 lors de l'écriture d'une phrase de plusieurs mots. Sur cette figure 4, l'axe des abscisses représente le temps et l'axe des ordonnées représente la hauteur hₚ mesurée, exprimée en cm.

La hauteur hₚ augmente lorsque l'utilisateur soulève le crayon 4 pour écrire une ponctuation ou pour marquer un espace entre deux mots ou deux traits. Par contre, quand la pointe 8 est en contact avec le support 10, la hauteur hₚ varie très peu. Ce constat permet d'identifier la hauteur à laquelle la pointe 8 est en contact avec le support 6 sans pour cela qu'il soit nécessaire de connaître l'épaisseur « e » du support 6.

Ensuite, lors d'une étape 70, la valeur du seuil S_{cp} est automatiquement déterminée à partir des valeurs enregistrées lors de l'étape 64.

Par exemple, à cet effet, lors d'une opération 72, l'unité 30 construit une densité D de probabilité de la hauteur hₚ à partir des mesures enregistrées. Dans, cet exemple, la densité D est un histogramme 74 (figure 5). Cet histogramme 74 comprend un axe des abscisses divisé en plusieurs plages Pₖ de hauteurs. Ces plages Pₖ sont contiguës et immédiatement successives. L'indice k identifie la plage. Ici, toutes les plages Pₖ ont la même largeur l. La largeur l dépend de la précision que l'on souhaite obtenir. Par exemple, la précision requise dans le cas d'un stylo à bille qui trace des traits dont la largeur est inférieure à 1 mm n'est pas la même que celle requise pour un marqueur dont l'épaisseur des traits est supérieure à 5mm. La largeur l est donc déterminée expérimentalement. Cette largeur l est typiquement inférieure à 1 mm et, de préférence, inférieure à 0,5 ou 0,25 ou 0,1 mm. Par exemple, ici, la largeur l est égale à 0,1 mm. Elle est généralement supérieure à 0,005mm.

Pour simplifier la figure 5, seules cinq plages P₁ à P₆ sont représentées. Ces plages P₁ à P₆ correspondent, respectivement, aux intervalles [0; 0,1], [0,1 ; 0,2], [0,2 ; 0,3], [0,3 ; 0,4], [0,4 ; 0,5], [0,5 ; 0,6].

Les pointillés sur l'axe des abscisses indiquent que seule une partie de l'histogramme 74 a été représentée sur la figure 5.

Chaque plage Pₖ est associée à une barre verticale Bₖ. Dans cet exemple, la longueur de cette barre Bₖ le long de l'axe des ordonnées représente le nombre Ntₖ de mesures enregistrées pour la hauteur hₚ dont la valeur est comprise dans la plage Pₖ. Ici, la longueur est directement proportionnelle au nombre Ntₖ.

Sur la figure 5, la longueur des barres B₁ à B₃ est nulle, de sorte qu'elles ne sont pas représentées.

Ensuite, lors d'une opération 76, l'unité 30 identifie le premier maximum, ou premier pic, dans l'histogramme 74 qui apparaît en balayant l'axe des abscisses par ordre de hauteur hₚ croissante. Un maximum se produit dans une plage Pₖ si la longueur de la barre Bₖ est strictement supérieure à la longueur de la barre Bₖ₋₁ et de la barre Bₖ₊₁. Ici, ce maximum se produit dans la plage P₅. Cette plage est notée Pₘₐₓ par la suite.

Le premier maximum permet d'identifier la plage Pₘₐₓ dans laquelle la pointe 8 est en contact avec le support 6.

Ensuite, lors d'une opération 78, l'unité 32 choisit la valeur du seuil S_{cp} en fonction d'une ou plusieurs valeurs contenues dans la plage Pₘₐₓ. Par exemple, ici, la valeur du seuil S_{cp} est choisie égale à la borne supérieure de la plage Pₘₐₓ + ε, où ε est une marge d'erreur. La marge d'erreur ε est déterminée expérimentalement. Par exemple, ε est ici choisi inférieur ou égal à 1 mm ou 0,5mm ou 0,1 mm ou 0,05 mm ou 0,0025mm. Généralement, la valeur du seuil S_{cp} ainsi choisie est à moins de 5mm ou 1 mm de la mesure de la hauteur pour laquelle la densité de probabilité présente le premier pic.

L'utilisation de la hauteur hₚ et du seuil S_{cp} pour détecter l'existence d'un point de contact entre la pointe 8 et le support 6 est robuste. En effet, , le seuil S_{cp} ne dépend pas de l'inclinaison du crayon et permet donc d'être plus robuste vis-à-vis d'un changement d'utilisateur.

Ici, la phase 62 est réitérée en boucle pour s'adapter dynamiquement et continûment aux modifications de l'épaisseur e

Une fois que le seuil S_{cp} a été configuré, l'unité 30 procède à une phase 90 de relevé de la trace laissée par le crayon 4 sur la face 10 du support 6.

Pour cela, lors d'une étape 92, l'unité 30 calcule la position de la pointe 8 dans le repère XYZ à partir de la position et de l'orientation mesurée de l'objet 14 lors de l'étape 60 et de la distance connue « a ». De plus, la position de la pointe au moment où celle-ci est en contact avec la face 10 est égale à la position du point de contact. Par exemple, la position de la pointe 8 est calculée comme décrit précédemment.

Lors d'une étape 94, l'unité 30 détecte le point de contact entre la pointe 8 et la face 10. Pour cela, l'unité 30 compare la hauteur hₚ au seuil S_{cp}. Un point de contact est détecté uniquement lorsque la hauteur hₚ est inférieure au seuil S_{cp}.

Ensuite, à chaque fois qu'un point de contact est détecté, lors d'une étape 96, l'unité 30 relève les coordonnées xₚ et yₚ au moment où se produit ce point de contact.

Ensuite, lors d'une étape 98, l'unité 30 enregistre, par exemple dans la mémoire 34, la position calculée pour la pointe 8 lorsque celle-ci est en contact avec le support 6.

Les étapes 92 à 98 sont réitérées en boucle.

L'enregistrement successif de la position de la pointe 8 sur la face 10 constitue le relevé de la trace laissée par la pointe 8 sur ce support 6. Par exemple, ici, chaque position de la pointe 8 lorsqu'elle est en contact avec le support 6 est enregistrée par ordre chronologique. A l'inverse, les positions de la pointe 8 lorsque celle-ci n'est pas en contact avec le support 6 sont enregistrées comme ne faisant pas partie de la trace laissée sur le support 6.

La figure 6 représente un autre mode de réalisation du procédé de la figure 3. Cet autre mode de réalisation est identique au procédé de la figure 3 sauf que la phases 62 est remplacée par une phase 110 de calibration. Pour simplifier la figure 6, seule la phase 110 a été représentée.

Initialement, lors d'une étape 112, l'utilisateur maintient la pointe 8 du crayon 4 en contact avec la face 10 puis déplace l'extrémité opposée du crayon 4 pour modifier son inclinaison par rapport au support 6 sans modifier la position de la pointe 8 sur ce support 6. La figure 7 représente deux positions du stylo 4 obtenues lors de l'étape 112. Sur cette figure, l'axe 7 correspond à une première inclinaison tandis que l'axe 7a correspond à une deuxième inclinaison du stylo 4. Pour simplifier la figure 7, seul l'axe 7a a été représenté pour la seconde inclinaison.

En parallèle, lors d'une étape 114, le calculateur 32 relève la position et l'orientation de l'objet 14 mesurées à partir du réseau de magnétomètres. Ainsi, le calculateur 14 relève un faisceau d'orientations qui pointent toutes vers le point de contact entre la pointe 8 et la face 10 du support 6. Sur la figure 7, ce point de contact porte la référence It.

Dans la suite de cette description, le calcul de la valeur du seuil S_{cp} et de la distance « a » est illustré dans le cas des première et seconde inclinaisons représentées sur la figure 7. Toutefois, ce qui est décrit ci-dessous peut aisément être généralisé au cas de plus de deux inclinaisons du crayon 4.

Lors d'une étape 116, l'unité 30 calcule le point d'intersection It entre les axes 7 et 7a. De préférence, pour cela, l'unité 30 calcule les coordonnées du point du repère XYZ qui minimisent l'écart entre les axes 7 et 7a. La hauteur du point d'intersection It par rapport à la face 22 permet d'obtenir une estimation de l'épaisseur e du support 6 puisque ici l'épaisseur de la tablette 20 est supposée connue.

Ensuite, lors d'une étape 118, la valeur du seuil S_{cp} est calculée à partir de cette estimation de l'épaisseur e. Par exemple, la valeur du seuil S_{cp} est choisie égale à cette estimation plus une marge d'erreur. La marge d'erreur est par exemple la même que celle utilisée lors de l'opération 78.

Enfin, lors d'une étape 120, la distance «a» est calculée. Par exemple, l'unité 30 calcule la distance « a » en fonction de la position et de l'orientation relevées lors de l'étape 114. En effet, puisque la pointe 8 est en contact avec la face 10, la distance « a » correspond à la distance qui sépare l'objet 14 de la face 10 dans la direction de son moment magnétique. Par exemple, la distance « a » est calculée à l'aide de la relation suivante : h₀ = a*cos θ + e, où :
- h₀ est la hauteur de l'objet 14 par rapport à la face 22 ;
- θ est l'angle entre le moment magnétique de l'objet 14 et la direction verticale Z, et
- « e » est l'estimation de l'épaisseur du support 6 obtenue lors de l'étape 116.

L'angle θ et la valeur de la hauteur h₀ sont déduits des relevés réalisés lors de l'étape 114. Une fois la distance « a » calculée, on dit qu'elle est « connue ».

La figure 8 représente un autre mode de réalisation du système. Dans ce mode de réalisation, le crayon 4 est remplacé par un crayon 130. Le crayon 130 est identique au crayon 4 à l'exception du fait qu'il comporte une pointe 132 et un objet magnétique 134.

Contrairement à la pointe 8, la pointe 132 ne présente aucune symétrie de révolution autour de l'axe 7. Par conséquent, la trace laissée par cette pointe 132 sur le support 6 dépend de sa position angulaire autour de l'axe 7. Par exemple, la pointe 132 est la pointe d'un calame.

L'objet magnétique 134 permet de déterminer la position angulaire de la pointe 132 autour de l'axe 7. Pour cela, l'objet 134 est identique à l'objet 14 sauf qu'il comporte un aimant permanent supplémentaire 136. Le moment magnétique de l'aimant 136 est non colinéaire au moment magnétique l'aimant 15. Par exemple, de préférence, ils sont orthogonaux l'un à l'autre.

L'unité 30 est adaptée pour mesurer la position et l'orientation de l'objet 134. Par exemple, si nécessaire, l'objet 134 est modélisé en approximant chaque aimant 15, 136 par un dipôle magnétique dans le modèle utilisé pour construire le filtre de Kalman étendu. Le procédé de fonctionnement de ce système se déduit de celui décrit en référence à la figure 3 ou 6 sauf que l'orientation de la pointe 132 dans le repère XYZ est aussi enregistrée pour constituer le relevé de la trace laissée par cette pointe sur le support 6.

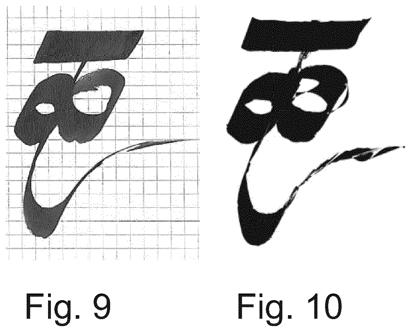

Les figures 9 et 10 représentent, respectivement, la trace réalisée avec le crayon 130 sur le support 6 d'écriture et la trace relevée à l'aide du système lors d'expérimentation de ce système.

De nombreux autres modes de réalisation sont possibles. Par exemple, le support d'écriture peut être du carton ou du tissu.

Dans un autre mode de réalisation, le support d'écriture est constitué par la tablette 20. Dans ce cas, si du liquide coloré est déposé par le crayon, il l'est directement sur la face 22 de la tablette 20. Par exemple, dans ce cas, la tablette 22 est un tableau, un mur ou une fenêtre.

Si la surface du réseau de magnétomètres est suffisamment étendue, le système 2 peut comporter simultanément plusieurs objets magnétiques 15. Dans ce cas, le procédé décrit ci-dessus est appliqué, en parallèle, pour chacun de ces objets magnétiques. Cela permet par exemple de relever la trace de plusieurs utilisateurs écrivant simultanément sur le même support.

D'autres algorithme pour déterminer la position et/ou l'orientation de l'objet 15 sont possibles. Par exemple, la méthode décrite dans US6269324 est utilisable. Ces méthodes n'utilisent pas nécessairement un filtre de Kalman. Par exemple, les méthodes décrites dans US2002/171427A1 ou US6263230B1 sont possibles.

En variante, les mesures des magnétomètres sont d'abord utilisées pour construire une empreinte magnétique de l'objet 15. Une empreinte magnétique est également connue sous le terme de « signature magnétique ». Elle est constituée d'une ou plusieurs caractéristiques propres à l'objet 15 et permettant de le distinguer d'autres objets magnétiques. Ces caractéristiques sont obtenues à partir des mesures des magnétomètres. L'empreinte construite est ensuite comparée à une base de données d'empreintes magnétiques prédéterminées d'objets connus. Cette base de données associe à chaque objet connu des informations complémentaires comme, par exemple, la valeur de son moment magnétique, la distance « a » ou autre. Si l'empreinte construite correspond à l'une de celles de la base de données, les informations complémentaires associées à cet objet connu sont alors utilisées pour améliorer ou simplifier la localisation de cet objet. Ainsi, dans un mode de réalisation avantageux, l'empreinte de l'objet magnétique est la valeur de son moment magnétique et la base de données associe à chaque valeur d'un moment magnétique une valeur de la distance « a ». Dès lors dans ce mode de réalisation, c'est la valeur du moment magnétique de l'aimant permanent qui code la valeur de la distance « a ».

L'approximation utilisée pour construire le filtre de Kalman peut aussi être une approximation quaternaire ou supérieure, c'est-à-dire que les équations de l'électromagnétisme sont approximées à un ordre supérieur à celui correspondant à l'approximation dipolaire.

Les magnétomètres du réseau de magnétomètres ne sont pas nécessairement rangés en colonnes et en lignes. Ils peuvent être agencés aussi selon d'autres motifs. Par exemple, les magnétomètres sont disposés sur chaque sommet de chaque maille triangulaire ou hexagonale d'un maillage d'un plan.

La disposition des magnétomètres les uns par rapport aux autres peut aussi être aléatoire ou non régulière. Ainsi, la distance entre deux magnétomètres immédiatement consécutifs dans le réseau n'est pas nécessairement la même pour toutes les paires de deux magnétomètres immédiatement consécutifs. Par exemple, la densité de magnétomètres dans une zone donnée du réseau peut être plus importante qu'ailleurs. Augmenter la densité dans une zone donnée peut permettre d'augmenter la précision de la mesure dans cette zone. Il est aussi possible de prévoir des zones de densité plus importante sur la périphérie du réseau pour limiter les effets de bord. Par exemple, le réseau de magnétomètres peut comporter une zone centrale dépourvue de magnétomètre. Dans ce cas, les magnétomètres sont uniquement répartis sur la périphérie de cette zone centrale et forment une bande de magnétomètres qui entoure et délimite la zone centrale. Typiquement, la largeur de cette bande est strictement inférieure à la largeur de la zone centrale mesurée selon la même direction.

La détermination automatique de la valeur du seuil S_{cp} en fonction du premier maximum de l'histogramme 74 peut être réalisée différemment. Par exemple, la valeur de la plage Pₘₐₓ retenue pour calculer la valeur du seuil S_{cp} peut être la valeur médiane de la plage Pₘₐₓ. D'autres possibilités existent pour calculer la valeur du seuil S_{cp} à partir de la plage Pₘₐₓ. Par exemple, il est possible d'effectuer une moyenne des différentes mesures de hauteur contenues dans la plage Pₘₐₓ. Dans cette moyenne, chaque mesure de hauteur peut être pondérée par un poids représentatif de la fiabilité de la mesure de cette hauteur. Par exemple, ce poids est égal à l'inverse de la variance vₚ de l'erreur d'estimation qui est associée à cette hauteur dans la table enregistrée dans la mémoire 34. Pour calculer cette moyenne, il est aussi possible de prendre en compte les mesures de hauteur contenues dans les plages Pₖ adjacentes à la plage Pₘₐₓ. Ensuite, la marge d'erreur ε peut être ajoutée à la moyenne calculée.

Dans un autre mode de réalisation, le premier maximum est identifié comme étant le maximum de la densité de probabilité ayant la plus petite largeur à mi-hauteur. En effet, seul le contact entre la pointe et le support d'écriture est capable de réduire suffisamment l'amplitude des variations de la hauteur hₚ.

Dans une autre variante, la longueur de chaque barre Bₖ de l'histogramme est non pas uniquement fonction du nombre de mesures Ntₖ mais, en plus, fonction d'un poids représentatif de la fiabilité de la mesure. A cet effet, la longueur de chaque barre Bₖ est par exemple aussi fonction de la variance vₚ associée à chaque mesure de hauteur contenue dans la plage Pₖ. Par exemple, à chaque fois qu'une mesure de hauteur est contenue dans la plage Pₖ, l'unité 30 augmente la longueur de la barre Bₖ d'une valeur égale à l'inverse de la variance vₚ associée à cette mesure de la hauteur hₚ. Cela permet de prendre en compte la précision sur la mesure ce qui augmente la précision avec laquelle le seuil de contact est déterminé.

L'opération 72 de construction de la densité D de probabilité de la hauteur hₚ peut aussi être réalisée en tenant compte d'un poids représentatif de la fiabilité de chaque mesure. Par exemple, l'unité 30 associe, à chaque mesure hₚᵢ de la hauteur hₚ, une distribution de probabilité P(hₖ) que la position verticale soit égale à hₖ, où l'indice i est un identifiant du numéro d'ordre de la mesure. Par exemple, si la distribution de probabilité est supposée Gausienne, on associe à chaque mesure hₚᵢ la densité de probabilité définie par la relation suivante : P(hₖ) = (1/(2πσᵢ²)^{1/2}exp[-(hₖ-µᵢ)²/2σᵢ²] ; où :
- P(hₖ) est la probabilité que la hauteur hₚ soit égale à hₖ,
- σᵢ est l'écart type,
- « exp » est l'opération mathématique exponentielle, et
- µᵢ est l'espérance.

L'espérance µᵢ est choisie égale à la mesure hₚᵢ. L'écart type σᵢ peut être calculé à partir la valeur de la variance vₚ associée à la mesure hₚᵢ. Cette densité de probabilité P(hₖ) est centrée sur la mesure hₚᵢ de la hauteur hₚ. L'unité 30 obtient alors la densité D de probabilité de la hauteur hₚ en sommant chacune des densités P(hₖ) obtenues à partir des différentes mesures de la hauteur hₚ au cours du temps. Ensuite, c'est cette densité D obtenue par sommation qui est utilisée lors de l'opération 76. Dans cette méthode, une mesure est donc représentée par une densité P(hₖ) de probabilité dont l'écart type est fonction de la variance vₚ. Cet ajout d'informations dans la densité D a pour effet de fiabiliser la détermination du seuil S_{cp}.

La valeur du seuil S_{cp} peut aussi être configurée automatiquement par d'autres procédés que ceux impliquant la construction d'un histogramme des mesures enregistrées. Toutefois, même dans ce cas, la valeur ainsi construite dépend du premier maximum de la densité de probabilité de la hauteur hₚ. Par exemple, une autre possibilité pour déterminer le seuil S_{cp} consiste à chercher uniquement le minimum sur un échantillon de mesures de hₚ pendant une fenêtre glissante. De préférence, on ajoute une marge d'erreur sur ce minimum. La marge d'erreur est par exemple de moins de 2 cm et, de préférence, de moins de 5mm, 1 mm ou 0.5mm voire 0.1 mm. Cette marge dépend du dispositif d'écriture utilisé. On peut prendre une marge importante pour un feutre et une marge plus faible pour un stylo à bille. Ainsi les mesures au dessous de ce seuil correspondent à une détection d'un point de contact. Le nombre d'échantillons ou de mesures contenus dans la fenêtre glissante doit être suffisamment important et supérieur à la durée entre deux points de contact successifs. Par exemple, la durée de la fenêtre glissante est d'au moins de 5s et, de préférence, supérieure à 10s, 30s ou 1min. Cela peut même être fait pour une fenêtre glissante dont la durée correspondant à l'ensemble des mesures réalisées. Une autre possibilité pour déterminer le minimum sur la fenêtre glissante, consiste à faire une moyenne des F mesures de hauteur les plus basses réalisées pendant la fenêtre glissante. De préférence, ce nombre F est choisi en fonction du nombre de mesures contenues à l'intérieur de la fenêtre glissante. Par exemple, le nombre F est une fraction du nombre de mesures contenues dans la fenêtre glissante. Par exemple, cette fraction est comprise entre 1/1000 et 1/10. A titre d'illustration, F est supérieur à deux, dix ou cinquante. Cette dernière méthode pour déterminer le seuil S_{cp} est moins sensible aux bruits.

Par ailleurs, si l'on considère que l'inclinaison du crayon 4 par rapport à la face 22 est toujours constante, alors le point de contact peut être déterminé en utilisant les mesures de la hauteur h₀ à la place des mesures de la hauteur hₚ. Dans cette variante, il n'est pas nécessaire de connaître la distance « a ».

La phase de configuration du seuil S_{cp} peut ne pas être réalisée de façon automatique. Par exemple, la valeur du seuil S_{cp} peut être choisie par l'utilisateur au lieu d'être configurée automatiquement comme décrit précédemment. La valeur du seuil S_{cp} peut aussi être fixée par défaut et préenregistrée. Ceci est possible lorsque l'épaisseur du support 6 est toujours la même ou est négligeable. Par exemple, dans le cas où l'on écrit directement sur la face 22 de la tablette 20, le seuil S_{cp} est préenregistré et il n'est pas nécessaire de procéder à une phase de configuration automatique de ce seuil.

Les phases 62 et 110 n'ont pas besoin d'être exécutées simultanément avec la mesure de la position et de l'orientation de l'objet 14 ou 134 réalisée lors de l'étape 60. Au contraire, ces phases peuvent aussi être exécutées après l'étape 60 sur des données enregistrées pendant l'étape 60.

L'étape 96 peut être réalisée différemment. Par exemple, les coordonnées enregistrées, à la place des coordonnées xₚ, yₚ, sont les coordonnées xᵢ, yᵢ correspondant à l'intersection entre la droite générée à partir de la position et de l'orientation de l'objet avec la face 10 du support 6. Une autre méthode lors de l'étape 96 consiste à enregistrer, à la place des coordonnées xₚ, yₚ, les coordonnées xₕ, yₕ, correspondant l'intersection entre la droite générée à partir de la position et de l'orientation de l'objet avec un plan parallèle à la face 22 mais décalé vers le haut de la valeur du seuil S_{cp}. Il est aussi possible d'enregistrer, à la place des coordonnées xₚ, yₚ, lors de l'étape 96, des coordonnées x, y correspondant à une pondération des trois coordonnées xₚ, yₚ, xᵢ, yᵢ et xₕ, yₕ. Par exemple on peut utiliser la moyenne de xᵢ, yᵢ et xₕ, yₕ.

En variante, la face 22 d'appui n'est pas nécessairement plane. Par exemple, elle peut être ronde ou sphérique.

Dans un autre mode de réalisation, le crayon ne dépose pas de liquide ou de solide coloré sur le support d'écriture. Par exemple, le crayon est un stylet. Toutefois, même dans ce mode de réalisation, le système 2 permet de détecter un point de contact entre la pointe du stylet et le support d'écriture et de relever la trace dessiner à l'aide du stylet. De préférence, dans ce cas, le système 2 est équipé d'une interface homme-machine permettant de représenter, idéalement en temps réel, par exemple sur un écran, la trace relevée au fur et à mesure que celle-ci est relevée. Par exemple, dans ce cas, la tablette 20 est un écran sur lequel est affiché en temps réel la trace relevée.

La configuration automatique du seuil S_{cp} telle que décrite en référence à la phase 62, peut être mise en oeuvre quels que soient les capteurs utilisés pour mesurer la hauteur hₚ. Ainsi, cette phase 62 peut être mise en oeuvre en utilisant d'autres capteurs que des magnétomètres. Par exemple, en variante, la hauteur hₚ est mesurée à l'aide d'une caméra et d'un algorithme de reconnaissance de forme apte à déterminer cette hauteur par rapport à la face 22. Dans ce cas, le crayon n'a pas besoin d'être pourvu d'un objet magnétique.

Tout ce qui a été dit précédemment dans le cas particulier d'un crayon s'applique également au cas du relevé de la trace d'un effaceur sur le support d'écriture. L'effaceur peut être une gomme ou agir par dépôt d'un produit chimique. Comme le crayon, l'effaceur peut aussi être un simple stylet. Dans ce dernier cas, le stylet permet uniquement d'effacer des portions de la trace relevée par le système 2 sans avoir aucune action sur le liquide ou le solide coloré déposé physiquement sur le support d'écriture. Contrairement au crayon, le contact entre la pointe de l'effaceur et le support d'écriture déclenche l'effacement, dans la mémoire 34, des positions relevées pour le crayon qui sont les mêmes que celles relevées pour la pointe de l'effaceur. Dans un autre mode de réalisation, le contact entre la pointe de l'effaceur et le support d'écriture déclenche l'effacement, dans la mémoire 34, des positions relevées pour le crayon qui sont contenues à l'intérieur d'une zone de dimension prédéfinie attachée à chaque position relevée pour la pointe de l'effaceur. Typiquement, la zone de dimension prédéfinie correspond aux dimensions de l'effaceur. Cet effaceur peut être utilisé pour effacer la trace d'un crayon relevée à l'aide du système 2 ou à l'aide d'un autre système, par exemple, conventionnel.

Les phases 62 et 110 peuvent être mises en oeuvre indépendamment l'une de l'autre comme décrit précédemment ou, au contraire, être successivement exécutées lors d'une même phase de calibration.

## Revendications

1. Procédé de détection d'un point de contact entre une pointe d'un ustensile et un support d'écriture, l'ustensile étant choisi dans le groupe composé d'un crayon et d'un effaceur, ce procédé comportant la détermination (92), à l'aide d'un objet magnétique fixé sans aucun degré de liberté sur l'ustensile, de la hauteur d'un point de l'ustensile par rapport à une face d'appui d'une tablette, cette face d'appui constituant le support d'écriture ou supportant le support d'écriture, ce procédé comportant
- la comparaison (94) de la hauteur déterminée à un seuil de contact pré-configuré, et
- la détection (94) d'un point de contact entre la pointe de l'ustensile et le support d'écriture si la hauteur déterminée est inférieure au seuil de contact et, dans le cas contraire, l'absence de détection d'un point de contact entre la pointe de l'ustensile et le support d'écriture, **caractérisé en ce que** le procédé comporte également:
une phase (62) de configuration automatique du seuil de contact, cette phase de configuration comportant :
- l'enregistrement (64) de toutes les mesures de la hauteur du point de l'ustensile réalisées sur un intervalle de temps pendant lequel l'ustensile est utilisé pour écrire sur le support d'écriture, et
- le choix (78) de la valeur du seuil de contact en fonction des mesures de hauteur enregistrées.

2. Procédé selon la revendication 1, dans lequel la détermination de la hauteur d'un point de l'ustensile consiste à déterminer la hauteur de la pointe de l'ustensile par rapport à la face d'appui, cette détermination comprenant :
a) la mesure (60) de la position et de l'orientation de l'objet magnétique fixé sans aucun degré de liberté sur l'ustensile dans une position connue par rapport à la pointe de l'ustensile, et
b) le calcul (92) de la hauteur de la pointe par rapport à la face d'appui à partir de la position et de l'orientation mesurées de l'objet magnétique et de la position connue de l'objet magnétique par rapport à la pointe de l'ustensile.

3. Procédé selon l'une quelconque des revendications précédentes, dans lequel la détermination (92) de la hauteur d'un point de l'ustensile par rapport à la face d'appui de la tablette se fait à l'aide d'un objet magnétique fixé sans aucun degré de liberté sur l'ustensile et comportant un aimant permanent.

4. Procédé selon l'une quelconque des revendications précédentes, dans lequel
- l'enregistrement (64) comporte également l'enregistrement d'un poids associé à chaque mesure enregistrée de la hauteur, ce poids représentant la fiabilité de cette mesure enregistrée de la hauteur, et
- le choix (88) de la valeur du seuil de contact est réalisé en fonction des mesures de hauteur enregistrées et du poids enregistré pour chacune de ces mesures.

5. Procédé selon l'une quelconque des revendications précédentes, dans lequel la phase de configuration automatique de la valeur du seuil de contact comprend :
- la construction (72) d'une densité de probabilité de la hauteur du point de l'ustensile à partir des mesures enregistrées, et
- le choix (88) de la valeur du seuil de contact égale, à plus ou moins 1 mm près, à la hauteur pour laquelle la densité de probabilité construite présente un premier maximum, le premier maximum étant le premier maximum rencontré en balayant un axe des abscisses de la densité de probabilité par ordre de hauteur croissante.

6. Procédé selon la revendication 5, dans lequel la construction de la densité de probabilité comporte la construction (72) d'un histogramme des mesures enregistrées comportant :
• un axe des abscisses découpé en plusieurs plages contiguës de hauteurs, la largeur de chaque plage étant inférieure ou égale à 5 mm, et
• une barre associée à chaque plage, la longueur de cette barre parallèlement à un axe des ordonnées étant fonction du nombre de mesures enregistrées de la hauteur dont la valeur est contenue dans la plage de hauteurs associée à cette barre.

7. Procédé selon l'une quelconque des revendications précédentes, dans lequel le procédé comporte une phase (110) de calibration automatique de la position de l'objet magnétique par rapport à la pointe, cet objet magnétique étant fixé sur l'ustensile de telle sorte que l'orientation du moment magnétique de l'objet magnétique identifie de façon unique un axe passant par la pointe, ce procédé comportant :
- lorsqu'un point de contact existe entre la pointe de l'ustensile et le support d'écriture, le relevé (114) de la position et de l'orientation mesurées de l'objet magnétique, et
- le calcul (120) de la position de la pointe par rapport à l'objet magnétique en fonction de la position et de l'orientation mesurée de cet objet magnétique lorsque la pointe est en contact avec le support d'écriture.

8. Procédé selon la revendication 2, dans lequel le procédé comporte :
- lors de l'étape a), la mesure du moment magnétique de l'objet magnétique,
- la sélection dans une base de données d'un moment magnétique préenregistré correspondant au moment magnétique mesuré lors de l'étape a), cette base de données associant à chaque moment magnétique préenregistré une information codant une position particulière d'un objet magnétique par rapport à la pointe de l'ustensile,
- lors de l'étape b), l'utilisation, en tant que position connue de l'objet magnétique par rapport à la pointe de l'ustensile, de la position codée par l'information associée au moment magnétique préenregistré sélectionné dans la base de données.

9. Procédé selon la revendication 1, ce procédé permettant également de relever la trace dessinée par la pointe sur le support d'écriture, dans lequel la détermination de la hauteur d'un point de l'ustensile consiste à calculer la hauteur de la pointe de l'ustensile par rapport à la face d'appui, cette détermination comportant :
- la mesure (60) de la position et de l'orientation de l'objet magnétique fixé sans aucun degré de liberté sur l'ustensile,
- le calcul (92) de la position et de la hauteur de la pointe en fonction de la position et de l'orientation mesurées de l'objet magnétique ce procédé comprenant également :
- à chaque fois qu'un point de contact est détecté, l'enregistrement (98) de la position calculée pour la pointe, l'enregistrement successif de ces positions calculées formant le relevé de la trace dessinée par la pointe de l'ustensile sur le support d'écriture.

10. Appareil de détection d'un point de contact entre une pointe d'un ustensile et un support d'écriture, l'ustensile étant choisi dans le groupe composé d'un crayon et d'un effaceur, cet appareil comportant :
- un réseau de magnétomètres (Mᵢⱼ) configuré pour mesurer la hauteur d'un objet magnétique fixé sans aucun degré de liberté sur l'ustensile par rapport à une face d'appui (22) d'une tablette (20), cette face d'appui constituant le support d'écriture ou supportant le support d'écriture,
- un calculateur (32) configuré pour déterminer la hauteur d'un point de l'ustensile par rapport à la face d'appui de la tablette à partir des mesures du réseau de magnétomètres, ce calculateur (32) étant également programmé pour :
- comparer la hauteur déterminée à un seuil de contact pré-configuré, et
- détecter un point de contact entre la pointe de l'ustensile et le support d'écriture si la hauteur déterminée est inférieure au seuil de contact et, dans le cas contraire, ne pas détecter un point de contact entre la pointe de l'ustensile et le support d'écriture, **caractérisé en ce que** le calculateur est également programmé pour:
- exécuter une phase de configuration automatique du seuil de contact, cette phase de configuration comportant :
- l'enregistrement de toutes les mesures de la hauteur du point de l'ustensile réalisées sur un intervalle de temps pendant lequel l'ustensile est utilisé pour écrire sur le support d'écriture, et
- le choix de la valeur du seuil de contact en fonction des mesures de hauteur enregistrées.

11. Appareil selon la revendication 10, dans lequel le réseau de magnétomètres (Mᵢⱼ) est un réseau de magnétomètres tri-axes fixés sans aucun degré de liberté à la face d'appui (22) et répartis le long d'au moins deux axes non colinéaires parallèles à la face d'appui, ce réseau comportant N magnétomètres triaxes reliés les uns aux autres sans aucun degré de liberté pour conserver une distance connue entre chacun de ces magnétomètres, où N est un nombre entier supérieur ou égal à cinq.

## Patentansprüche

1. Verfahren zur Erkennung eines Kontaktpunktes zwischen einer Spitze eines Gerätes und einer Schreibunterlage, wobei das Gerät aus der Gruppe ausgewählt ist, die aus einem Stift und einem Wischer besteht, wobei dieses Verfahren die Bestimmung (92), mithilfe eines ohne einen Freiheitsgrad an dem Gerät befestigten magnetischen Objekts, der Höhe eines Punktes des Gerätes bezüglich einer Auflagefläche einer Tafel umfasst, wobei diese Auflagefläche die Schreibunterlage bildet oder die Schreibunterlage trägt,
wobei dieses Verfahren umfasst:
- den Vergleich (94) der bestimmten Höhe mit einem vorkonfigurierten Kontaktschwellenwert, und
- die Erkennung (94) eines Kontaktpunktes zwischen der Spitze des Gerätes und der Schreibunterlage, falls die bestimmte Höhe kleiner als der Kontaktschwellenwert ist, und andernfalls die Nichterkennung eines Kontaktpunktes zwischen der Spitze des Gerätes und der Schreibunterlage,
**dadurch gekennzeichnet, dass** das Verfahren außerdem umfasst:
eine Phase (62) der automatischen Konfiguration des Kontaktschwellenwertes, wobei diese Konfigurationsphase umfasst:
- die Aufzeichnung (64) aller Messungen der Höhe des Punktes des Gerätes, die in einem Zeitintervall vorgenommen werden, in dem das Gerät zum Schreiben auf der Schreibunterlage verwendet wird, und
- die Wahl (78) des Wertes des Kontaktschwellenwertes in Abhängigkeit von den aufgezeichneten Höhenmessungen.

2. Verfahren nach Anspruch 1, wobei die Bestimmung der Höhe eines Punktes des Gerätes darin besteht, die Höhe der Spitze des Gerätes bezüglich der Auflagefläche zu bestimmen, wobei diese Bestimmung umfasst:
a) die Messung (60) der Position und der Ausrichtung des ohne einen Freiheitsgrad an dem Gerät befestigten magnetischen Objekts in einer bekannten Position bezüglich der Spitze des Gerätes, und
b) die Berechnung (92) der Höhe der Spitze bezüglich der Auflagefläche aus der gemessenen Position und Ausrichtung des magnetischen Objekts und der bekannten Position des magnetischen Objekts bezüglich der Spitze des Gerätes.

3. Verfahren nach einem der vorhergehenden Ansprüche, wobei die Bestimmung (92) der Höhe eines Punktes des Gerätes bezüglich der Auflagefläche der Tafel mithilfe eines magnetischen Objekts durchgeführt wird, das ohne einen Freiheitsgrad an dem Gerät befestigt ist und einen Permanentmagneten aufweist.

4. Verfahren nach einem der vorhergehenden Ansprüche, wobei
- die Aufzeichnung (64) auch die Aufzeichnung eines Gewichts umfasst, das jeder aufgezeichneten Messung der Höhe zugeordnet ist, wobei dieses Gewicht die Zuverlässigkeit dieser aufgezeichneten Messung der Höhe repräsentiert, und
- die Wahl (88) des Wertes des Kontaktschwellenwertes in Abhängigkeit von den aufgezeichneten Höhenmessungen und dem aufgezeichneten Gewicht für jede dieser Messungen durchgeführt wird.

5. Verfahren nach einem der vorhergehenden Ansprüche, wobei die Phase der automatischen Konfiguration des Wertes des Kontaktschwellenwertes umfasst:
- die Konstruktion (72) einer Wahrscheinlichkeitsdichte der Höhe des Punktes des Gerätes aus den aufgezeichneten Messungen, und
- die Wahl (88) des Wertes des Kontaktschwellenwertes, auf plus/minus 1 mm genau, gleich der Höhe, für welche die konstruierte Wahrscheinlichkeitsdichte ein erstes Maximum aufweist, wobei das erste Maximum das erste Maximum ist, das bei einer Abtastung einer Abszissenachse der Wahrscheinlichkeitsdichte in der Richtung zunehmender Höhe vorgefunden wird.

6. Verfahren nach Anspruch 5, wobei die Konstruktion der Wahrscheinlichkeitsdichte die Konstruktion (72) eines Histogramms der aufgezeichneten Messungen umfasst, welches aufweist:
• eine Abszissenachse, die in mehrere aneinander angrenzende Höhenbereiche zerlegt ist, wobei die Breite jedes Bereichs kleiner als oder gleich 5 mm ist, und
• für jeden Bereich einen zugeordneten Balken, wobei die Länge dieses Balkens parallel zu einer Ordinatenachse von der Anzahl aufgezeichneter Messungen der Höhe, deren Wert in dem diesem Balken zugeordneten Bereich von Höhen enthalten ist, abhängig ist.

7. Verfahren nach einem der vorhergehenden Ansprüche, wobei das Verfahren eine Phase (110) der automatischen Kalibrierung der Position des magnetischen Objekts bezüglich der Spitze umfasst, wobei dieses magnetische Objekt an dem Gerät derart befestigt wird, dass die Ausrichtung des magnetischen Moments des magnetischen Objekts auf eindeutige Weise eine durch die Spitze verlaufende Achse identifiziert, wobei dieses Verfahren umfasst:
- wenn ein Kontaktpunkt zwischen der Spitze des Gerätes und der Schreibunterlage existiert, die Erfassung (114) der gemessenen Position und Ausrichtung des magnetischen Objekts, und
- die Berechnung (120) der Position der Spitze bezüglich des magnetischen Objekts in Abhängigkeit von der gemessenen Position und Ausrichtung dieses magnetischen Objekts, wenn sich die Spitze in Kontakt mit der Schreibunterlage befindet.

8. Verfahren nach Anspruch 2, wobei das Verfahren umfasst:
- in Schritt a) die Messung des magnetischen Moments des magnetischen Objekts,
- die Auswahl, aus einer Datenbank, eines voraufgezeichneten magnetischen Moments, das dem in Schritt a) gemessenen magnetischen Moment entspricht, wobei diese Datenbank jedem voraufgezeichneten magnetischen Moment eine Information zuordnet, die eine spezielle Position eines magnetischen Objekts bezüglich der Spitze des Gerätes codiert,
- in Schritt b) die Verwendung der Position, die durch die Information codiert ist, welche dem aus der Datenbank ausgewählten voraufgezeichneten magnetischen Moment zugeordnet ist, als bekannte Position des magnetischen Objekts bezüglich der Spitze des Gerätes.

9. Verfahren nach Anspruch 1, wobei dieses Verfahren außerdem ermöglicht, die von der Spitze auf der Schreibunterlage gezeichnete Spur zu erfassen, wobei die Bestimmung der Höhe eines Punktes des Gerätes darin besteht, die Höhe der Spitze des Gerätes bezüglich der Auflagefläche zu berechnen, wobei diese Bestimmung umfasst:
- die Messung (60) der Position und der Ausrichtung des ohne einen Freiheitsgrad an dem Gerät befestigten magnetischen Objekts,
- die Berechnung (92) der Position und der Höhe der Spitze in Abhängigkeit von der gemessenen Position und Ausrichtung des magnetischen Objekts,
wobei dieses Verfahren außerdem umfasst:
- jedes Mal, wenn ein Kontaktpunkt erkannt wird, die Aufzeichnung (98) der für die Spitze berechneten Position, wobei die aufeinander folgende Aufzeichnung dieser berechneten Positionen die Erfassung der von der Spitze des Gerätes auf der Schreibunterlage gezeichneten Spur bildet.

10. Vorrichtung zur Erkennung eines Kontaktpunktes zwischen einer Spitze eines Gerätes und einer Schreibunterlage, wobei das Gerät aus der Gruppe ausgewählt ist, die aus einem Stift und einem Wischer besteht, wobei diese Vorrichtung aufweist:
- ein Netz von Magnetometern (Mᵢⱼ), das dafür ausgelegt ist, die Höhe eines ohne einen Freiheitsgrad an dem Gerät befestigten magnetischen Objekts bezüglich einer Auflagefläche (22) einer Tafel (20) zu messen, wobei diese Auflagefläche die Schreibunterlage bildet oder die Schreibunterlage trägt,
- einen Rechner (32), der dafür ausgelegt ist, die Höhe eines Punktes des Gerätes bezüglich einer Auflagefläche der Tafel aus den Messungen des Netzes von Magnetometern zu bestimmen, wobei dieser Rechner (32) außerdem dafür programmiert ist:
- die bestimmte Höhe mit einem vorkonfigurierten Kontaktschwellenwert zu vergleichen, und
- einen Kontaktpunkt zwischen der Spitze des Gerätes und der Schreibunterlage zu erkennen, falls die bestimmte Höhe kleiner als der Kontaktschwellenwert ist, und andernfalls keinen Kontaktpunkt zwischen der Spitze des Gerätes und der Schreibunterlage zu erkennen,
**dadurch gekennzeichnet, dass** der Rechner außerdem dafür programmiert ist:
- eine Phase der automatischen Konfiguration des Kontaktschwellenwertes auszuführen, wobei diese Konfigurationsphase umfasst:
- die Aufzeichnung aller Messungen der Höhe des Punktes des Gerätes, die in einem Zeitintervall vorgenommen werden, in dem das Gerät zum Schreiben auf der Schreibunterlage verwendet wird, und
- die Wahl des Wertes des Kontaktschwellenwertes in Abhängigkeit von den aufgezeichneten Höhenmessungen.

11. Vorrichtung nach Anspruch 10, wobei das Netz von Magnetometern (Mᵢⱼ) ein Netz von dreiachsigen Magnetometern ist, die ohne einen Freiheitsgrad an der Auflagefläche (22) befestigt sind und entlang wenigstens zweier nicht kollinearer, zu der Auflagefläche paralleler Achsen verteilt sind, wobei dieses Netz N dreiachsige Magnetometer umfasst, die ohne einen Freiheitsgrad miteinander verbunden sind, um einen bekannten Abstand zwischen allen diesen Magnetometern aufrechtzuerhalten, wobei N eine ganze Zahl größer oder gleich fünf ist.

## Claims

1. Method of detecting a point of contact between a tip of an instrument and a writing support, the instrument being chosen in the group composed of a pen and of an eraser, this method comprising the determination (92), with the aid of a magnetic object fixed without any degree of freedom on the instrument, of the height of a point of the instrument with respect to a bearing face of a tablet, this bearing face constituting the writing support or supporting the writing support,
this method comprising:
- the comparison (94) of the height determined with a preconfigured contact threshold, and
- the detection (94) of a point of contact between the tip of the instrument and the writing support if the height determined is less than the contact threshold and, in the converse case, the absence of detection of a point of contact between the tip of the instrument and the writing support,
**characterized in that** the method also comprises:
a phase (62) of automatic configuration of the contact threshold, this configuration phase comprising:
- the recording (64) of all the measurements of the height of the point of the instrument carried out over a time interval during which the instrument is used to write on the writing support, and
- the choosing (78) of the value of the contact threshold as a function of the height measurements recorded.

2. Method according to Claim 1, in which the determination of the height of a point of the instrument consists in determining the height of the tip of the instrument with respect to the bearing face, this determination comprising:
a) the measurement (60) of the position and of the orientation of the magnetic object fixed without any degree of freedom on the instrument in a known position with respect to the tip of the instrument, and
b) the computation (92) of the height of the tip with respect to the bearing face on the basis of the measured position and of the measured orientation of the magnetic object and of the known position of the magnetic object with respect to the tip of the instrument.

3. Method according to any one of the preceding claims, in which the determination (92) of the height of a point of the instrument with respect to the bearing face of the tablet is done with the aid of a magnetic object fixed without any degree of freedom on the instrument and comprising a permanent magnet.

4. Method according to any one of the preceding claims, in which
- the recording (64) also comprises the recording of a weight associated with each recorded measurement of the height, this weight representing the reliability of this recorded measurement of the height, and
- the choosing (88) of the value of the contact threshold is carried out as a function of the height measurements recorded and of the weight recorded for each of these measurements.

5. Method according to any one of the preceding claims, in which the phase of automatic configuration of the value of the contact threshold comprises:
- the construction (72) of a probability density of the height of the point of the instrument on the basis of the recorded measurements, and
- the choosing (88) of the value of the contact threshold equal, to within plus or minus 1 mm, to the height for which the probability density constructed exhibits a first maximum, the first maximum being the first maximum encountered when scanning an abscissa axis of the probability density in order of increasing height.

6. Method according to Claim 5, in which the construction of the probability density comprises the construction (72) of a histogram of the recorded measurements comprising:
• an abscissa axis cut up into several contiguous spans of heights, the width of each span being less than or equal to 5 mm, and
• a bar associated with each span, the length of this bar parallel to an ordinate axis being dependent on the number of recorded measurements of the height whose value is contained in the span of heights which is associated with this bar.

7. Method according to any one of the preceding claims, in which the method comprises a phase (110) of automatic calibration of the position of the magnetic object with respect to the tip, this magnetic object being fixed on the instrument in such a way that the orientation of the magnetic moment of the magnetic object identifies in a unique manner an axis passing through the tip, this method comprising:
- when a point of contact exists between the tip of the instrument and the writing support, the logging (114) of the measured position and of the measured orientation of the magnetic object, and
- the computation (120) of the position of the tip with respect to the magnetic object as a function of the position and of the orientation of this magnetic object, measured when the tip is in contact with the writing support.

8. Method according to Claim 2, in which the method comprises:
- during step a), the measurement of the magnetic moment of the magnetic object,
- the selection in a database of a prerecorded magnetic moment corresponding to the magnetic moment measured during step a), this database associating with each prerecorded magnetic moment an item of information coding a particular position of a magnetic object with respect to the tip of the instrument,
- during step b), the use, in the guise of known position of the magnetic object with respect to the tip of the instrument, of the position coded by the item of information associated with the prerecorded magnetic moment selected from the database.

9. Method according to Claim 1, this method making it possible also to log the trace drawn by the tip on the writing support, in which the determination of the height point of the instrument consists in calculating the height of the tip of the instrument with respect to the bearing face, this determination comprising:
- the measurement (60) of the position and of the orientation of the magnetic object fixed without any degree of freedom on the instrument,
- the computation (92) of the position and of the height of the tip as a function of the measured position and of the measured orientation of the magnetic object this method also comprising:
- each time that a point of contact is detected, the recording (98) of the computed position for the tip, the successive recording of these computed positions forming the log of the trace drawn by the tip of the instrument on the writing support.

10. Apparatus for detecting a point of contact between a tip of an instrument and a writing support, the instrument being chosen in the group composed of a pen and of an eraser, this apparatus comprising:
- a network of magnetometers (Mᵢⱼ) configured to measure the height of a magnetic object fixed without any degree of freedom on the instrument with respect to a bearing face (22) of a tablet (20), this bearing face constituting the writing support or supporting the writing support,
- a computer (32) configured to determine the height of a point of the instrument with respect to the bearing face of the tablet on the basis of the measurements of the network of magnetometers,
the computer (32) being also programmed to:
- compare the height determined with a preconfigured contact threshold, and
- detect a point of contact between the tip of the instrument and the writing support if the height determined is less than the contact threshold and, in the converse case, not detect a point of contact between the tip of the instrument and the writing support,
**characterized in that** the computer is also programmed in order to:
- execute a phase of automatic configuration of the contact threshold, this configuration phase comprising:
- a recording of all the measurements of the height of the tip of the instrument which were carried out over a time interval during which the instrument is used to write on the writing support, and
- a choice of a value of a contact threshold is a function of the height measurements recorded.

11. Apparatus according to Claim 10, in which the network of magnetometers (Mᵢⱼ) is a network of tri-axis magnetometers fixed without any degree of freedom to the bearing face (22) and distributed along at least two non-collinear axes parallel to the bearing face, this network comprising N tri-axis magnetometers linked to one another without any degree of freedom so as to preserve a known distance between each of these magnetometers, where N is an integer number greater than or equal to five.
